# EUROPÄISCHE PATENTSCHRIFT

(11) **EP 3 705 926 B1**
(45) Veröffentlichungstag und Bekanntmachung des Hinweises auf die Patenterteilung: **18.09.2024**
(21) Anmeldenummer: 20161517.6
(22) Anmeldetag: 06.03.2020
(51) Int. Cl.: G09G 5/10, G09G 3/34, G02B 26/08, H04N 9/31, G09G 3/00, F21S 41/675

(54) **VORRICHTUNG ZUM BETREIBEN EINER STEUEREINHEIT EINES MIKROSPIEGELAKTORS SOWIE VERFAHREN**
METHOD AND DEVICE FOR OPERATING A CONTROL UNIT OF A MICRO-MIRROR ACTUATOR
DISPOSITIF DE FONCTIONNEMENT D'UNE UNITÉ DE COMMANDE D'UNE MATRICE DE MICRO-MIROIRS AINSI QUE PROCÉDÉ

(30) Priorität: 07.03.2019 DE 102019105838
(43) Veröffentlichungstag der Anmeldung: 09.09.2020
(73) Patentinhaber: Marelli Automotive Lighting Reutlingen (Germany) GmbH, 72762 Reutlingen (DE)
(72) Erfinder: Horbelt, Markus, 75417 Mühlacker (DE); Steininger, Klaus, 72800 Eningen (DE); Schnizer, Thomas, 72762 Reutlingen (DE)
(74) Vertreter: DREISS Patentanwälte PartG mbB

(56) Entgegenhaltungen:
- EP-A1- 3 214 900
- CN-A- 109 343 299
- DE-A1- 102010 009 554
- US-A1- 2016 105 654
- US-A1- 2020 168 137

## Beschreibung

Die Erfindung betrifft eine Vorrichtung zum Betreiben einer Steuereinheit eines Mikrospiegelaktors einer Beleuchtungseinrichtung eines Kraftfahrzeugs sowie ein Verfahren zum Betreiben der Steuereinheit des Mikrospiegelaktors.

Es ist bekannt, dass die Spiegel Aktoren mit einem Tastverhältnis betrieben werden, welche die Kippbewegungen der einzelnen Mikrospiegel bestimmt. Dieses Tastverhältnis ist für sämtliche Mikrospiegel oder wenigstens eine Anzahl von Mikrospiegeln gleich. Zusätzlich werden die Kippbewegungen durch einen jeweiligen Pixel Wert bestimmt, der mittels eines jeweiligen Bildes, welches durch den Mikrospiegelaktor umgesetzt wird, empfangen wird.

CN 109343299 offenbart die Verwendung eines Mikrospiegelaktors in einem Projektor.

Aus US 2016105654 ist die Verwendung eines Mikrospiegelaktors in einem Bildprojektionsapparat bekannt.

Das Umschalten des Tastverhältnisses geht üblicherweise mit einem sichtbaren Blitzen und/oder Dimmen einher.

Folglich besteht die Aufgabe der vorliegenden Erfindung darin, den Betrieb eines Mikrospiegelaktors zu verbessern.

Diese Aufgabe wird durch eine Vorrichtung gemäß dem Anspruch 1 sowie durch ein Verfahren gemäß einem neben geordneten Anspruch gelöst. Vorteilhafte Weiterbildungen sind in den Unteransprüchen angegeben und finden sich ferner in der nachfolgenden Beschreibung und in der Zeichnung.

Gemäß einem ersten Aspekt dieser Beschreibung wird eine Vorrichtung zum Betreiben einer Steuereinheit eines Mikrospiegelaktors einer Beleuchtungseinrichtung eines Kraftfahrzeugs bereitgestellt, wobei die Vorrichtung mindestens einen Prozessor und mindestens einen Speicher mit Computerprogrammcode umfasst, wobei der Computerprogrammcode so konfiguriert ist, dass er mit dem mindestens einen Prozessor bewirkt, dass die Vorrichtung einen Bildstrom für die Steuereinheit bereitstellt, Einzelbilder des Bildstroms in Abhängigkeit von einer Gültigkeit eines ersten Werts eines Grundtastverhältnisses, welches für eine Mehrzahl von Mikrospiegeln des Mikrospiegelaktors wirksam ist, ermittelt, eine Umschaltanforderung zum Umschalten des Grundtastverhältnisses auf einen zweiten Wert ermittelt, die Umschaltanforderung zu einem ersten Zeitpunkt in Richtung der Steuereinheit übermittelt, und die Einzelbilder des Bildstroms ab einem zweiten Zeitpunkt, welcher ausgehend von dem ersten Zeitpunkt nach einer Wartezeitdauer eintritt, in Abhängigkeit von einer Gültigkeit des zweiten Werts des Grundtastverhältnisses ermittelt.

Vorteilhaft wird durch das Abwarten der Wartezeitdauer eine Umschaltzeitdauer der Steuereinheit für das Tastverhältnis berücksichtigt, um eine zeitsynchrone Umschaltung des Grundtastverhältnisses und der Einzelbilder zu erreichen. Die Steuereinheit wird also derart betrieben, dass eine synchrone Umschaltung auf den zweiten Wert des Grundtastverhältnisses und die entsprechend ermittelten Einzelbilder vollzogen wird. Damit kann eine ungewollte Verschiebung der Helligkeit in der abgestrahlten Lichtverteilung vermieden werden. Folglich wird ermöglicht, das Grundtastverhältnis im Dauerbetrieb umzuschalten.

Die Umschaltanforderung wird beispielsweise durch eine gewünschte Erhöhung oder Verringerung der Beleuchtungsstärke der Abstrahllichtverteilung ausgelöst. Nach der erfolgten Umschaltung werden durch den neuen Pixelwertbereich andere Beleuchtungsstärken pro Pixel erreichbar als vor der Umschaltung. Damit wird der Dynamikbereich der abgestrahlten Lichtstärke der Beleuchtungseinrichtung vergrößert, und zwar ohne Verlust der Darstellungsqualität.

Es wird also ein echtzeitfähiges zum Bildinhalt synchrones Umschalten des Tastverhältnisses ermöglicht.

Ein vorteilhaftes Beispiel zeichnet sich dadurch aus, dass die Vorrichtung Pixelwerte der Einzelbilder vor dem zweiten Zeitpunkt in Abhängigkeit von der Gültigkeit des ersten Werts des Grundtastverhältnisses skaliert, und Pixelwerte der Einzelbilder nach dem zweiten Zeitpunkt in Abhängigkeit von der Gültigkeit des zweiten Werts des Grundtastverhältnisses skaliert. So wird erreicht, dass eine mittels des Mikrospiegelaktors erzeugte Abstrahllichtverteilung während des Umschaltens des Werts des Tastverhältnisses keinen ungewollten Lichtstärkesprung aufweist. Vielmehr wird beispielsweise bei einem über den zweiten Zeitpunkt hinweg gleich bleibenden Pixelwert eine im Wesentlichen gleichbleibende Lichtstärke von dem entsprechenden Mikrospiegel abgestrahlt. Vielmehr wird aus der Differenz zwischen dem ersten und zweiten Wert ein gewollter Budgetgewinn bzw. ein gewollter Budgetverlust realisiert, um eine höhere Beleuchtungsstärke bzw. verringerte Beleuchtungsstärke in der abgestrahlten Lichtverteilung zu realisieren.

Ein vorteilhaftes Beispiel zeichnet sich dadurch aus, dass der zweite Wert für das Grundtastverhältnis größer ist als der erste Wert, und wobei eine maximale Lichtstärke der abgestrahlten Lichtverteilung nach dem zweiten Zeitpunkt größer ist als vor dem zweiten Zeitpunkt. Vorteilhaft wirkt sich ein erhöhtes Grundtastverhältnis auf die erreichbare maximale Lichtstärke aus. Ausgehend von einem gleichmäßigen Übergang der Lichtstärke zu dem zweiten Zeitpunkt kann die Beleuchtungsstärke über den Pixelwert nun erhöht werden.

Ein vorteilhaftes Beispiel zeichnet sich dadurch aus, dass die Vorrichtung nach der Ermittlung der Umschaltanforderung zum Umschalten des gültigen Grundtastverhältnisses auf den zweiten Wert eine Reservierung eines Kontrollkanals zur Übertragung der Umschaltanforderung durchführt, und eine weitere Wartezeitdauer bis zum Versand der Umschaltanforderung zu dem ersten Zeitpunkt auf dem Kontrollkanal in Richtung der Steuereinheit abwartet. Durch die vorzeitige Reservierung des Kontrollkanals und das Abwarten ist es möglich, dass ein zumindest abschnittsweise nicht-echtzeitfähiger Übertragungskanal im Sinne des Kontrollkanals zur Übertragung der Umschaltanforderung genutzt werden kann.

Ein vorteilhaftes Beispiel zeichnet sich dadurch aus, dass die Vorrichtung die Umschaltanforderung als in den Bildstrom eingebettete Information der Steuereinheit bereitstellt. Vorteilhaft können weitere Signalleitungen und Schnittstellen entfallen. Insbesondere profitiert die Übermittlung der Umschaltanforderung bei dieser Einbettung in den Bildstrom von einer Echtzeitfähigkeit des Bildstromübertragungskanals.

Ein vorteilhaftes Beispiel zeichnet sich dadurch aus, dass die Vorrichtung eine Bildberechnungseinheit und eine Treibereinheit umfasst, wobei die Treibereinheit zum Anschluss an eine Treiberschnittstelle der Steuereinheit ausgebildet ist, und wobei die Bildberechnungseinheit zum Anschluss an eine Videoschnittstelle der Steuereinheit ausgebildet ist. Vorteilhaft wird durch die Aufteilung der Vorrichtung in die Treibereinheit und die Bildberechnungseinheit die Schnittstellensystematik der Steuereinheit abgebildet.

Ein vorteilhaftes Beispiel zeichnet sich dadurch aus, dass eine Beobachtungseinheit dazu ausgebildet ist, den von der Bildberechnungseinheit erzeugten Bildstrom auf das Auftreten der Umschaltanforderung hin zu untersuchen und das Auftreten der Umschaltanforderung in dem Bildstrom an die Treibereinheit zu übermitteln, und wobei die Treibereinheit die Umschaltanforderung an die Steuereinheit übermittelt.

Ein vorteilhaftes Beispiel zeichnet sich dadurch aus, dass der zweite Wert für das Grundtastverhältnis separat von der Umschaltanforderung in Richtung der Steuereinheit übertragen wird. Vorteilhaft kann die Größe der Umschaltanforderung dadurch auf ein Bit reduziert werden. Die Übertragung des zweiten Werts an die Steuereinheit ist weniger zeitkritisch und erfolgt somit separat.

Ein vorteilhaftes Beispiel zeichnet sich dadurch aus, dass die Wartezeitdauer und die weitere Wartezeitdauer konstante Werte sind. Vorteilhaft wird beispielsweise gemäß einem Worst-Case-Szenario die längste erwartete Wartezeitdauer bestimmt und konstant gewählt, um stets den gewünschten Effekt, nämlich die synchrone Umschaltung des Tastverhältnisses und des Bildstromes bzw. dessen Pixelwerte zu erreichen.

Gemäß einem zweiten Aspekt dieser Beschreibung wird ein Verfahren zum Betreiben einer Steuereinheit eines Mikrospiegelaktors einer Beleuchtungseinrichtung eines Kraftfahrzeugs bereitgestellt, wobei das Verfahren umfasst: Bereitstellen eines Bildstroms für die Steuereinheit, Ermitteln von Einzelbildern des Bildstroms in Abhängigkeit von einer Gültigkeit eines ersten Werts eines Grundtastverhältnisses, welches für eine Mehrzahl von Mikrospiegeln des Mikrospiegelaktors wirksam ist, Ermitteln einer Umschaltanforderung zum Umschalten des Grundtastverhältnisses auf einen zweiten Wert, Übermitteln der Umschaltanforderung zu einem ersten Zeitpunkt in Richtung der Steuereinheit, und Ermitteln der Einzelbilder des Bildstroms ab einem zweiten Zeitpunkt, welcher ausgehend von dem ersten Zeitpunkt nach einer Wartezeitdauer eintritt, in Abhängigkeit von einer Gültigkeit des zweiten Werts des Grundtastverhältnisses.

In der Zeichnung zeigen:
Figur 1 eine Vorrichtung zum Betreiben einer Steuereinheit eines Mikrospiegelaktors;
Figur 2 eine Beleuchtungseinrichtung für ein Kraftfahrzeug;
Figur 3 ein schematisches Sequenzdiagramm;
Figur 4 beispielhaft eine synchrone Umschaltung eines Grundtastverhältnisses; und
Figur 5 einen schematischen Ablauf zur synchronen Umschaltung des Grundtastverhältnisses.

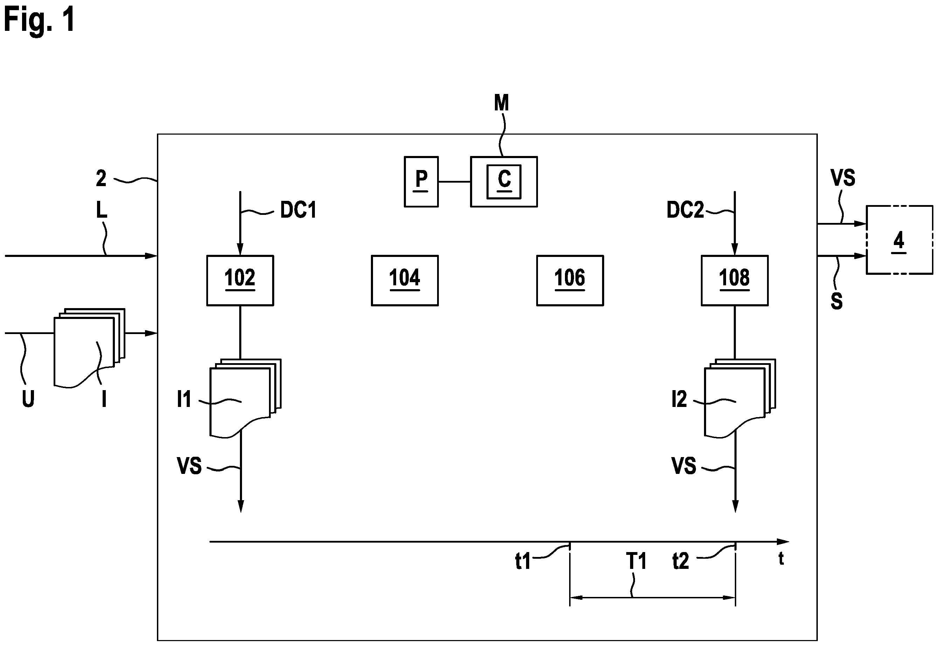

Figur 1 zeigt eine Vorrichtung 2 zum Betreiben einer Steuereinheit 4 eines Mikrospiegelaktors einer Beleuchtungseinrichtung eines Kraftfahrzeugs in schematischer Form. Die Vorrichtung 2 empfängt beispielsweise einen Ursprungsbildstrom U mit jeweiligen Einzelbildern oder ermittelt diesen selbstständig. In Abhängigkeit von dem Ursprungsbildstrom U und in Abhängigkeit von einem ersten Wert DC1 eines Grundtastverhältnisses bzw. eines zugeordneten Werts wird in einem ersten Schritt 102 ein Bildstrom VS mit jeweiligen Einzelbildern I1 der Steuereinheit 4 bereitgestellt. Der jeweilige Wert des Grundtastverhältnisses impliziert zwei Zeitdauern für einen jeweiligen Kippzustand eine jeden der Mikrospiegel. Das Grundtastverhältnis wirkt also für eine Mehrzahl von Mikrospiegeln also Pixeln des Mikrospiegelaktors insbesondere für alle Mikrospiegel des Mikrospiegelaktors.

In einem Schritt 104 wird eine Umschaltanforderung ermittelt, welche das Umschalten des gültigen Grundtastverhältnisses von dem Wert DC1 zu dem Wert DC2 umfasst. Diese Umschaltanforderung kann beispielsweise in Abhängigkeit von einem zugeführten Lichtstärkewert L ermittelt werden, welcher eine Lichtstärke in der abgestrahlten Lichtverteilung charakterisiert. Beispielsweise wird eine niedrigere Lichtstärke bei Tageslicht angefordert als bei Nacht.

Zu einem ersten Zeitpunkt t1 wird in einem Schritt 106 die Umschaltanforderung S in Richtung der Steuereinheit 4 übermittelt. Die Vorrichtung 2 wartet eine Wartezeitdauer T1 ab. Zu einem Zeitpunkt t2 ist die Wartezeitdauer T1 abgelaufen und in einem Schritt 108 wird eine Berechnung von Einzelbildern I2 in Abhängigkeit von dem zweiten Wert DC2 des Grundtastverhältnisses bzw. dessen Gültigkeit durchgeführt. Mithin transformiert der Schritt 108 die zugeführten Eingangsbilder I des Ursprung Bildstroms U in Ausgangsbilder I2 mit entsprechend an den neuen Wert DC2 angepassten Pixelwerten.

Die Abhängigkeit der Berechnung der Einzelbilder von dem jeweiligen Wert des Grundtastverhältnisses umfasst beispielsweise eine Multiplikation eines Grauwertes eines jeweiligen Pixels eines der Eingangsbilder I mit einem dem ersten oder zweiten Wert DC1, DC2 des Grundtastverhältnisses zugeordneten Faktor, um zu einem Grauwert eines Pixels eines Einzelbildes I1, I2 des Bildstroms VS zu gelangen. Der zugeordnete Faktor kann beispielsweise in einer Tabelle abgespeichert und dem jeweiligen Wert des gültigen Grundtastverhältnisses zugeordnet sein. In anderer Form ist der zugeordnete Faktor aus einer Kennlinie ermittelbar, welche den Faktor mit Werten des Grundtastverhältnisses verknüpft. Weitergehend sind auch Kennfelder denkbar, welche weitere Parameter berücksichtigen.

Die Einzelbilder des Bildstroms VS werden der Steuereinheit 4 bereitgestellt. Die Umschaltanforderung S wird derart an die Steuereinheit 4 übermittelt, sodass das erste gemäß dem Schritt 108 ermittelte Einzelbild der Einzelbilder I2 unmittelbar nach der Umschaltung des Grundtastverhältnisses von dem ersten Wert DC1 auf den zweiten Wert DC2 bzw. synchron zu dieser Umschaltung auf den Mikrospiegelaktor angewandt wird.

Die Vorrichtung 2 umfasst mindestens einen Prozessor P und mindestens einen Speicher S mit Computerprogrammcode C, wobei der Computerprogrammcode C so konfiguriert ist, dass er mit dem mindestens einen Prozessor P die in dieser Beschreibung erläuterten Verfahrens ausführt. In einem Beispiel ist die Vorrichtung 2 in Untereinheiten aufgeteilt, welche wiederum eigene Prozessoren, Speicher und Computerprogrammcodes umfassen.

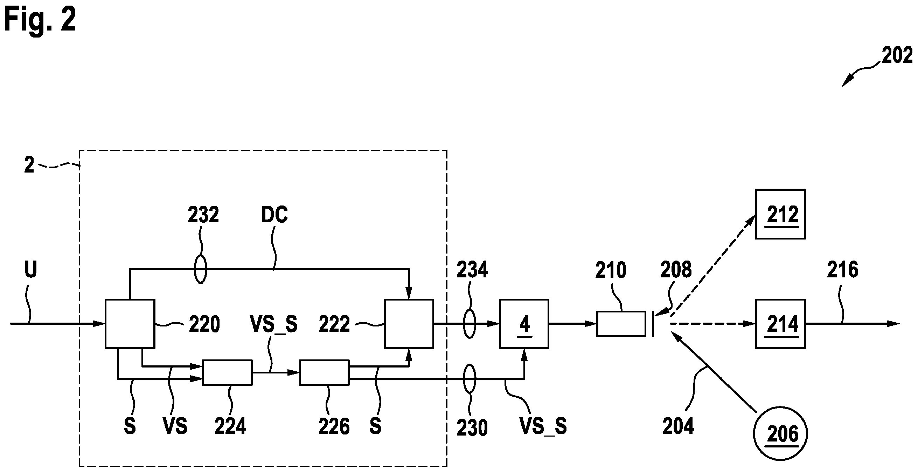

Figur 2 zeigt ein schematisches Blockschaltbild der Beleuchtungseinrichtung 202 für das Kraftfahrzeug. Eine erste Lichtverteilung 204 wird ausgehend von einer Lichtquelle 206 auf eine Oberfläche 208 des Mikrospiegelaktors 210 gerichtet. Die einzelnen Mikrospiegel an der Oberfläche 208 werden individuell verkippt und reflektieren - je nach Kippzustand - das auftreffende Licht der ersten Lichtverteilung 204 entweder auf eine Strahlenfalle 212 oder auf eine Abstrahloptik 214, um das Licht im zweiten Falle in eine Abstrahllichtverteilung 216 umzuwandeln.

Der Mikrospiegelaktor 210, auch als DMD (Digital Micromirror Device) bezeichenbar, ist ein optisches mikroelektrisch-mechanisches System (MEMS), das eine Reihe von hochreflektierenden Mikrospiegeln beispielsweise aus Aluminium umfasst. Das DMD-Pixel in Form eines Mikrospiegels ist ein elektromechanisches Element, welches zwei stabile Mikrospiegel-Zustände einnehmen kann, die durch die Geometrie und Elektrostatik des Pixels während des Betriebs bestimmt werden. Mechanisch besteht das Pixel aus einem Mikrospiegel, der mittels eines Durchgangs an einem verdeckten Torsionsscharnier befestigt ist. Das DMD-Pixel nimmt also eine dieser beiden Positionen ein, welche die Richtung bestimmen, in die das auftreffende Licht abgelenkt wird. Insbesondere ist das DMD ein räumlicher Lichtmodulator. Beispielsweise wird der positive (+) Zustand zur Abstrahloptik 214 hin geneigt und als "Ein"-Zustand bezeichnet. Ebenso wird der negative (-) Zustand von der Beleuchtung weggeklappt und als "Aus" bezeichnet.

Der jeweilige Mikrospiegel wird laufend ein- und ausgeschaltet (Arbeitszyklus), wobei sich aus den dem jeweiligen Zustand zugeordneten Zeitspannen (beispielsweise in Prozent) das Tastverhältnis in Form einer Einschaltzeit zu einer Ausschaltzeit ergibt. Als Beispiel zeigt ein Tastverhältnis von 90/10 an, dass sich das referenzierte Pixel zu 90 % im Ein-Zustand der Zeit (und zu 10 % im Aus-Zustand der Zeit) befindet, während 10/90 bedeuten würde, dass sich das Pixel zu 90 % im Aus-Zustand befindet. Ebenso zeigt ein Tastverhältnis von 50/50 an, dass das Pixel zu 50 % an und zu 50 % aus ist. Da ein Mikrospiegel grundsätzlich nur den einen oder den anderen Zustand (On oder Off) einnehmen kann, addieren sich die beiden Zahlen (Prozentsätze) immer zu 100. Die Zeiten des Zustandsübergangs sind hierbei vernachlässigbar.

Während des Betriebs des Mikrospiegelaktors wird dieser mit einem Grundtastverhältnis betrieben. Dieses Grundtastverhältnis, welches auch als Binning bezeichnet wird, betrifft eine Mehrzahl von Mikrospiegeln insbesondere sämtliche Mikrospiegel des Mikrospiegelaktors. Dieses Grundtastverhältnis dient dazu, während des Betriebs zu verhindern, dass einzelne Mikrospiegel verklemmen. Das tatsächliche Tastverhältnis eines jeweiligen Mikrospiegels ergibt sich aus dem Grundtastverhältnis und dem zugeführten Pixelwert bzw. Grauwerte des jeweiligen Pixels bzw. Mikrospiegels.

Die Vorrichtung 2 umfasst eine Bildberechnungseinheit 220 und eine Treibereinheit 222. Der Bildberechnungseinheit wird der Ursprungsbildstrom U zugeführt. Die Umschaltanforderung S wird entweder selbstständig durch die Bildberechnungseinheit 220 ermittelt oder dieser zugeführt. Entsprechend der Umschaltanforderung S ergibt sich, dass der Mikrospiegelaktor 210 mit einem neuen zweiten Wert für das Grundtastverhältnis betrieben werden muss. Eine Einheit 224 ermittelt einen Bildstrom VS_S, in welchem die Umschaltanforderung S eingebettet ist. Eine Einheit 226 beobachtet den Bildstrom VS_S und extrahiert die Umschaltanforderung S, um diese der Treibereinheit 222 zuzuführen. Der Bildstrom wird beispielsweise über einen parallelen Bus 230 in Richtung der Steuereinheit 4 übertragen.

Der Wert DC des Grundtastverhältnisses wird beispielsweise über einen seriellen Bus 232 wie beispielsweise einen CAN-Bus (CAN: Controller Area Network) an die Treibereinheit 222 übertragen. Zur Aktivierung des jeweiligen Werts des Grundtastverhältnisses ist die Treibereinheit 222 über einen weiteren Bus 234, beispielsweise einen SPI-Bus (SPI: Serial Peripheral Interface), an die Steuereinheit 4 angebunden. Der weitere Bus 234 wird auch als Kontrollkanal bezeichnet.

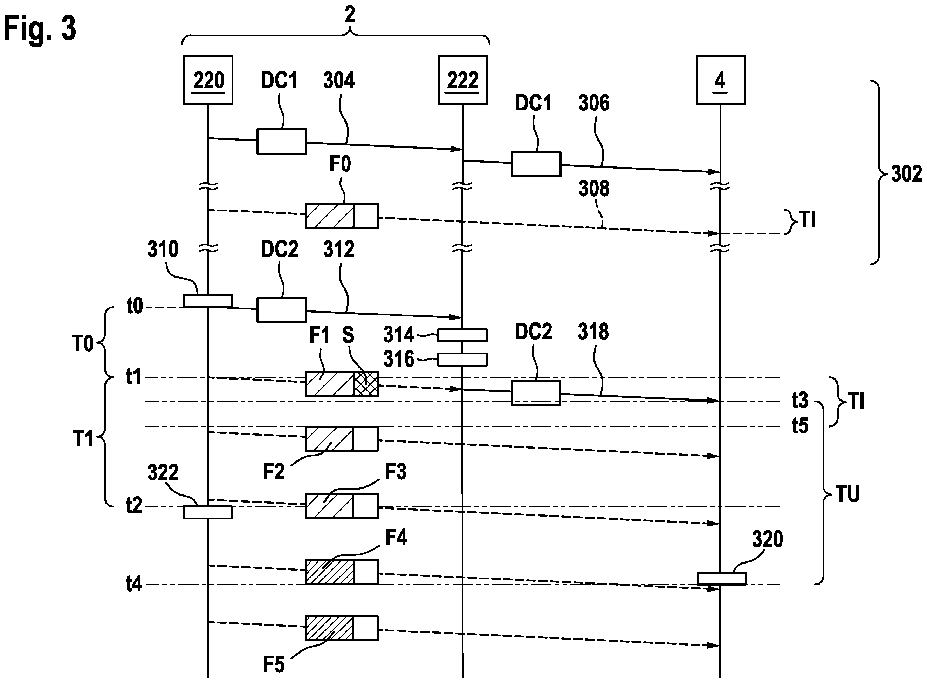

Figur 3 zeigt ein schematisches Sequenzdiagramm. Gemäß einer Initialisierungsphase 302 wird ein erstes Grundtastverhältnis bzw. ein erster Wert DC1 des Grundtastverhältnisses gemäß einem Schritt 304 zunächst an die Treibereinheit 222 übertragen, welche wiederum dafür sorgt, dass der erhaltene Wert DC1 des

Grundtastverhältnisses in einem Schritt 306 an die Steuereinheit 4 übermittelt und eingestellt wird. Anschließend können in einem Schritt 308 Einzelbilder F0 ausgehend von der Bildberechnungseinheit 220 an die Steuereinheit 4 übergeben werden, um unter Anwendung des Wertes DC1 des Grundtastverhältnisses den Mikrospiegelaktor in Abhängigkeit von dem jeweiligen Einzelbild F0 zu betreiben. Zu Übertragung des Einzelbildes 310 vergeht eine Zeitdauer TI. Im Folgenden wird der Wechsel des Wertes des Grundtastverhältnisses und die hierzu notwendigen Schritte beschrieben.

Die Bildberechnungseinheit 220 ermittelt in einem Schritt 310 die Umschaltanforderung S zum Umschalten des gültigen Grundtastverhältnisses auf den zweiten Wert DC2. In einem Schritt 312 wird dieser zweite Wert DC2 für das Grundtastverhältnis an die Treibereinheit 222 übermittelt. In einem Schritt 314 reserviert die Treibereinheit 222 den weiteren Bus 234 zu der nachfolgenden zeitkritischen Übertragung der Umschaltanforderung S. In einem Schritt 316 wird die Treibereinheit 222 in einen Wartemodus versetzt, in welchem diese auf den Erhalt der Umschaltanforderung S wartet.

Zu dem Zeitpunkt t0 wurde also wenigstens die Reservierungsanforderung ausgehend von der Bildberechnungseinheit 220 versendet. Es wird eine Wartezeitdauer T0 abgewartet, um zu dem ersten Zeitpunkt t1 die Umschaltanforderung S gemeinsam mit einem Einzelbild F1 in Richtung der Steuereinheit 4 zu verschicken. Durch Beobachten des Bildstroms VS und die vorab erfolgte Reservierung des Busses 234 ist die Treibereinheit 222 in der Lage, in einem Schritt 318 das Grundtastverhältnis an die Steuereinheit 4 zu übermitteln. Der Änderungswunsch wird also zu einem Zeitpunkt t3 von der Steuereinheit 4 empfangen. Zwischen den Zeitpunkten t1 und t3 liegt eine Zeitdauer, die kleiner ist als die Zeitdauer TI zum Versenden und Empfangen eines Einzelbildes.

Die Umschaltzeitdauer TU, welche zwischen dem Anliegen des Änderungswunsches des Grundtastverhältnisses zum Zeitpunkt t3 und dem tatsächlichen Umsetzen nach einem Umschaltschritt 320 liegt, ist fest durch die Steuereinheit 4 vorgegeben und umfasst beispielsweise die Zeitdauer von zwei aufeinanderfolgenden Einzelbild-Delays TI. Nach dem Ablauf der Umschaltzeitdauer TU wird zu einem Zeitpunkt t4 der neue zweite Wert DC2 für das Grundtastverhältnis angewendet. Ab diesem Zeitpunkt t4 werden die empfangenen Einzelbilder unter Anwendung des neuen Grundtastverhältnisses dargestellt.

Folglich wartet die Bildberechnungseinheit 220 die Zeitdauer T1 ab, um nach dem Zeitpunkt t2 in einem Schritt 322 die Berechnung der Einzelbilder in Abhängigkeit von der Aktivierung des zweiten Werts DC2 des Grundtastverhältnisses durchzuführen. Die Zeitdauer T1 wird beispielsweise fest gewählt. In einem anderen Beispiel zählt die Bildberechnungseinheit 220 zwei Einzelbildzeiten TI, um anschließend den Schritt 322 durchzuführen. Einzelbilder F4 und F5 werden dann so berechnet, dass sie mit dem neuen Grundtastverhältnis durch den Mikrospiegelaktor dargestellt werden.

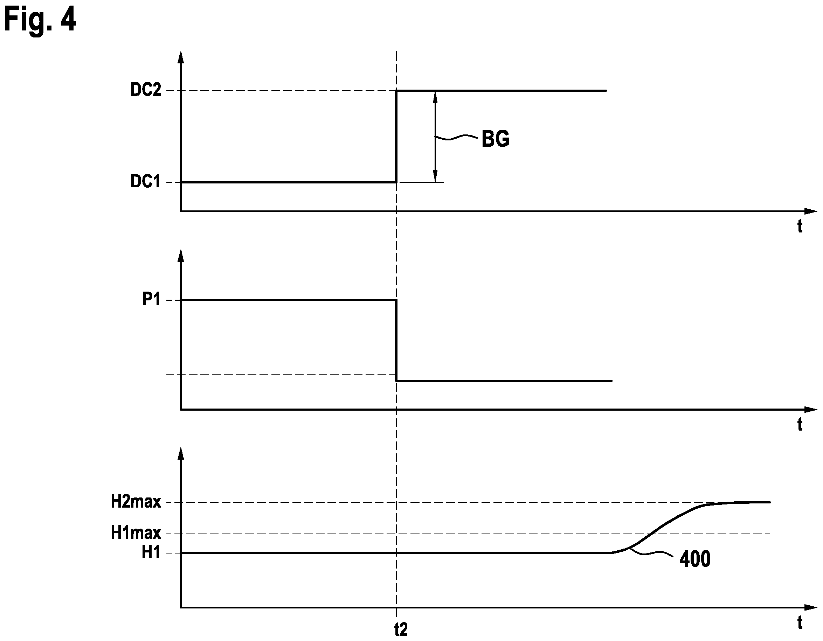

Figur 4 illustriert beispielhaft die synchrone Umschaltung des Grundtastverhältnisses zu dem Zeitpunkt t2, also dem synchronen Umschaltzeitpunkt. Der erste Wert DC1 des Grundtastverhältnisses erlaubt, dass ein Pixelwert P1 - beispielsweise ein Grauwert - eine Helligkeit H1 in der abgestrahlten Lichtverteilung bewirkt. Mit dem eingestellten Wert DC1 ist es möglich, eine maximale Helligkeit H1max in der abgestrahlten Lichtverteilung zu erreichen. Zu dem Zeitpunkt t2 erfolgt die synchrone Umschaltung des Grundtastverhältnisses auf den zweiten Wert DC2 und die neu berechneten Einzelbilder. Die synchrone Umschaltung hat zur Folge, dass die Helligkeit H1 - vorausgesetzt der entsprechende Pixelwert im Einzelbild des Ursprungsbildstroms bleibt konstant - über den Zeitpunkt t2 hinweg konstant bleibt. Selbstverständlich bleibt auch bei einer Änderung des Pixelwerts über der Zeit und über den Zeitpunkt t2 hinweg die synchrone Umschaltung anwendbar und verhindert ungewollte Sprünge in der Helligkeit der abgestrahlten Lichtverteilung.

Durch die Erhöhung des Grundtastverhältnisses auf den Wert DC2 wird ein Binning Gain BG erreicht, der bewirkt, dass die maximal abstrahlte Helligkeit H2max gegenüber dem vorigen Wert H1max erhöht wird. Die Umschaltanforderung wird beispielsweise ermittelt, um gemäß dem Verlauf 400 nach der synchronen Umschaltung die abgestrahlte Helligkeit zumindest für eine Anzahl von Pixeln zu erreichen. So kann beispielsweise ein auf die Fahrbahn vor dem Kraftfahrzeug projiziertes Symbol in seiner Helligkeit auf Anforderung erhöht werden.

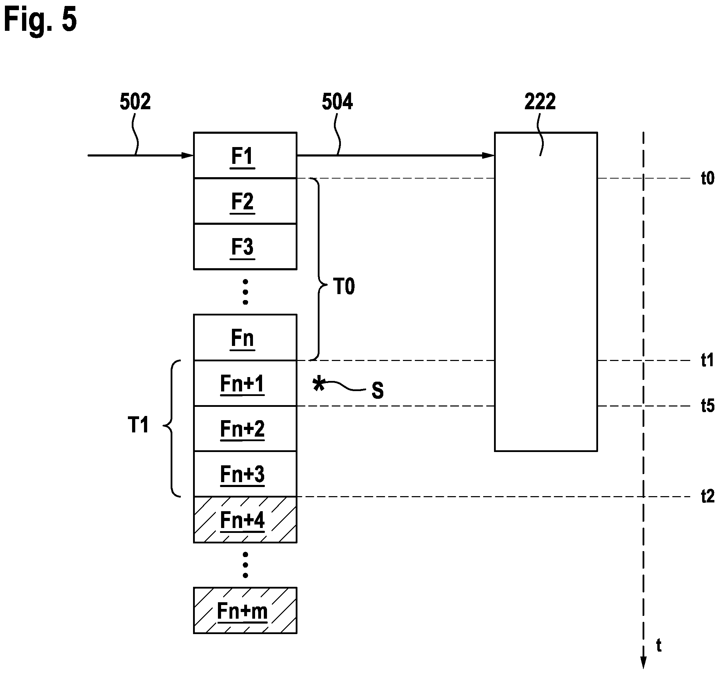

Figur 5 zeigt eine schematische Darstellung des Ablaufs zur synchronen Umschaltung des Grundtastverhältnisses und der Berechnung der Einzelbilder. In dem Schritt 502 wird beispielsweise die Umschaltanforderungen S zum Umschalten des gültigen Grundtastverhältnisses auf den zweiten Wert ermittelt. In dem Schritt 504 wird die Reservierungsanfrage für den Bus zur Übermittlung der Umschaltanforderung S an die Treibereinheit 222 übermittelt. Die Zeitdauer T0 stellt hierbei eine Worst-Case-Zeitdauer dar, welche maximal zur Reservierung des Buses zur Übermittlung der Umschaltanforderung S darstellt. Nach Ablauf der Zeitdauer T0 wird die Umschaltanforderung S in das Einzelbild Fn+1 eingebettet. Es wird die Zeitdauer T1 abgewartet bzw. eine auf das Einzelbild Fn+1 folgende Anzahl von Einzelbildern abgewartet, um das Einzelbild Fn+4 als erstes Einzelbild anders zu berechnen als die vorfolgenden Bilder, nämlich in Abhängigkeit von der Anwendung des zweiten Werts des Grundtastverhältnisses für die Mehrzahl von Mikrospiegeln.

## Patentansprüche

1. Eine Vorrichtung (2) zum Betreiben einer Steuereinheit (4) eines Mikrospiegelaktors (210) einer Beleuchtungseinrichtung (202) eines Kraftfahrzeugs, wobei die Vorrichtung (2) mindestens einen Prozessor (P) und mindestens einen Speicher (M) mit Computerprogrammcode (C) umfasst, wobei der Computerprogrammcode (C) so konfiguriert ist, dass er mit dem mindestens einen Prozessor (P) bewirkt, dass die Vorrichtung (2)
einen Bildstrom (VS) für die Steuereinheit (4) bereitstellt,
Einzelbilder des Bildstroms (VS) in Abhängigkeit von einer Gültigkeit eines ersten Werts (DC1) eines Grundtastverhältnisses, welches für eine Mehrzahl von Mikrospiegeln des Mikrospiegelaktors (210) wirksam ist, ermittelt, wobei ein Tastverhältnis eines jeweiligen Mikrospiegels sich aus dem Grundtastverhältnis und einem zugeführten Pixelwert des jeweiligen Einzelbildes ergibt,
eine Umschaltanforderung (S) zum Umschalten des Grundtastverhältnisses auf einen zweiten Wert (DC2) ermittelt,
die Umschaltanforderung (S) zu einem ersten Zeitpunkt (t1) in Richtung der Steuereinheit (4) übermittelt, und
die Einzelbilder des Bildstroms (VS) ab einem zweiten Zeitpunkt (t2), welcher ausgehend von dem ersten Zeitpunkt (t1) nach einer zwei Einzelbildzeiten umfassende Wartezeitdauer (T1) eintritt, in Abhängigkeit von einer Gültigkeit des zweiten Werts (DC2) des Grundtastverhältnisses ermittelt, wobei die Wartezeitdauer (T1) abgewartet wird, um die Einzelbilder in Abhängigkeit von der Anwendung des zweiten Werts (DC2) des Grundtastverhältnisses zu berechnen.

2. Die Vorrichtung (2) gemäß dem Anspruch 1, wobei die Vorrichtung (2)
Pixelwerte der Einzelbilder des Bildstroms (VS) vor dem zweiten Zeitpunkt (t2) in Abhängigkeit von der Gültigkeit des ersten Werts (DC1) des Grundtastverhältnisses skaliert, und
Pixelwerte der Einzelbilder des Bildstroms (VS) nach dem zweiten Zeitpunkt (t2) in Abhängigkeit von der Gültigkeit des zweiten Werts (DC2) des Grundtastverhältnisses skaliert.

3. Die Vorrichtung (2) gemäß dem Anspruch 2, wobei der zweite Wert (DC2) für das Grundtastverhältnis größer ist als der erste Wert (DC1), und wobei eine maximale Lichtstärke der abgestrahlten Lichtverteilung nach dem zweiten Zeitpunkt (t2) größer ist als vor dem zweiten Zeitpunkt (t2).

4. Die Vorrichtung (2) gemäß einem der vorigen Ansprüche, wobei die Vorrichtung (2)
nach der Ermittlung der Umschaltanforderung (S) zum Umschalten des gültigen Grundtastverhältnisses auf den zweiten Wert (DC2) eine Reservierung eines Kontrollkanals (234) zur Übertragung der Umschaltanforderung (S) durchführt, und
eine weitere Wartezeitdauer (T0) bis zum Versand der Umschaltanforderung (S) zu dem ersten Zeitpunkt (t1) auf dem Kontrollkanal (234) in Richtung der Steuereinheit (4) abwartet.

5. Die Vorrichtung (2) gemäß einem der vorigen Ansprüche, wobei die Vorrichtung (2) die Umschaltanforderung (S) als in den Bildstrom (VS) eingebettete Information der Steuereinheit (4) bereitstellt.

6. Die Vorrichtung (2) gemäß einem der vorigen Ansprüche, wobei die Vorrichtung (2) eine Bildberechnungseinheit (220) und eine Treibereinheit (222) umfasst, wobei die Treibereinheit (222) zum Anschluss an eine Treiberschnittstelle der Steuereinheit (4) ausgebildet ist, und wobei die Bildberechnungseinheit (220) zum Anschluss an eine Videoschnittstelle der Steuereinheit (4) ausgebildet ist.

7. Die Vorrichtung (2) gemäß den Ansprüchen 5 und 6, wobei eine Beobachtungseinheit (226) dazu ausgebildet ist, den von der Bildberechnungseinheit (220) erzeugten Bildstrom (VS_S) auf das Auftreten der Umschaltanforderung (S) hin zu untersuchen und das Auftreten der Umschaltanforderung (S) in dem Bildstrom (VS_S) an die Treibereinheit (222) zu übermitteln, und wobei die Treibereinheit (222) die Umschaltanforderung (S) an die Steuereinheit (4) übermittelt.

8. Die Vorrichtung (2) gemäß einem der vorigen Ansprüche, wobei der zweite Wert (DC2) für das Grundtastverhältnis abschnittsweise separat von der Umschaltanforderung (S) in Richtung der Steuereinheit (4) übertragen wird.

9. Die Vorrichtung (2) gemäß einem der vorigen Ansprüche, wobei die Wartezeitdauer (T1) und die weitere Wartezeitdauer (T0) konstante Werte sind.

10. Ein Verfahren zum Betreiben einer Steuereinheit (4) eines Mikrospiegelaktors (210) einer Beleuchtungseinrichtung (202) eines Kraftfahrzeugs, wobei das Verfahren umfasst:
Bereitstellen eines Bildstroms (VS) für die Steuereinheit (4),
Ermitteln von Einzelbildern des Bildstroms (VS) in Abhängigkeit von einer Gültigkeit eines ersten Werts (DC1) eines Grundtastverhältnisses, welches für eine Mehrzahl von Mikrospiegeln des Mikrospiegelaktors (210) wirksam ist, wobei ein Tastverhältnis eines jeweiligen Mikrospiegels sich aus dem
Grundtastverhältnis und einem zugeführten Pixelwert des jeweiligen Einzelbildes ergibt,
Ermitteln einer Umschaltanforderung (S) zum Umschalten des Grundtastverhältnisses auf einen zweiten Wert (DC2),
Übermitteln der Umschaltanforderung (S) zu einem ersten Zeitpunkt (t1) in Richtung der Steuereinheit (4), und
Ermitteln der Einzelbilder des Bildstroms (VS) ab einem zweiten Zeitpunkt (t2), welcher ausgehend von dem ersten Zeitpunkt (t1) nach einer zwei
Einzelbildzeiten umfassende Wartezeitdauer (T1) eintritt, in Abhängigkeit von einer Gültigkeit des zweiten Werts (DC2) des Grundtastverhältnisses, wobei die Wartezeitdauer (T1) abgewartet wird, um die Einzelbilder in Abhängigkeit von der Anwendung des zweiten Werts (DC2) des Grundtastverhältnisses zu berechnen.

## Claims

1. Device (2) for operating a control unit (4) of a micromirror actuator (210) of a lighting device (202) of a motor vehicle, wherein the device (2) comprises at least one processor (P) and at least one memory (M) with computer program code (C), wherein the computer program code (C) is configured such that, together with the at least on processor (P), it causes the device (2)
to provide an image stream (VS) for the control unit (4),
to determine individual images of the image stream (VS) depending on a validity of a first value (DC1) of a basic duty cycle which is effective for a plurality of micromirrors of the micromirror actuator (210), wherein a duty cycle of a particular micromirror results from the basic duty cycle and a supplied pixel value of the particular individual image,
to determine a switching request (S) for switching the basic duty cycle to a second value (DC2),
to transmit the switching request (S) at a first point in time (t1) in the direction of the control unit (4), and
to determine the individual images of the image stream (VS) from a second point in time (t2), which occurs after a waiting period (T1) comprising two individual image times starting from the first point in time (t1), depending on a validity of the second value (DC2) of the basic duty cycle, wherein the waiting period (T1) is waited for in order to calculate the individual images depending on the use of the second value (DC2) of the basic duty cycle.

2. Device (2) according to claim 1, wherein the device (2)
scales pixel values of the individual images of the image stream (VS) before the second point in time (t2) depending on the validity of the first value (DC1) of the basic duty cycle, and
scales pixel values of the individual images of the image stream (VS) after the second point in time (t2) depending on the validity of the second value (DC2) of the basic duty cycle.

3. Device (2) according to claim 2, wherein the second value (DC2) for the basic duty cycle is greater than the first value (DC1), and wherein a maximum light intensity of the emitted light distribution after the second point in time (t2) is greater than before the second point in time (t2).

4. Device (2) according to any of the preceding claims, wherein the device (2)
reserves, after the switching request (S) for switching the valid basic duty cycle to the second value (DC2) has been determined, a control channel (234) for transmitting the switching request (S), and
waits for a further waiting period (T0) until the switching request (S) is sent at the first point time (t1) to the control channel (234) in the direction of the control unit (4).

5. Device (2) according to any of the preceding claims, wherein the device (2) provides the switching request (S) to the control unit (4) as information embedded in the image stream (VS).

6. Device (2) according to any of the preceding claims, wherein the device (2) comprises an image calculation unit (220) and a driver unit (222), wherein the driver unit (222) is designed for connection to a driver interface of the control unit (4), and wherein the image calculation unit (220) is designed for connection to a video interface of the control unit (4).

7. Device (2) according to claims 5 and 6, wherein an observation unit (226) is designed to examine the image stream (VS_S) generated by the image calculation unit (220) for the appearance of the switching request (S) and to transmit the appearance of the switching request (S) in the image stream (VS_S) to the driver unit (222), and wherein the driver unit (222) transmits the switching request (S) to the control unit (4).

8. Device (2) according to any of the preceding claims, wherein the second value (DC2) for the basic duty cycle is transmitted in portions separately from the switching request (S) in the direction of the control unit (4).

9. Device (2) according to any of the preceding claims, wherein the waiting period (T1) and the further waiting period (T0) are constant values.

10. Method for operating a control unit (4) of a micromirror actuator (210) of a lighting device (202) of a motor vehicle, wherein the method comprises:
providing an image stream (VS) for the control unit (4),
determining individual images of the image stream (VS) depending on a validity of a first value (DC1) of a basic duty cycle which is effective for a plurality of micromirrors of the micromirror actuator (210), wherein a duty cycle of a particular micromirror results from the basic duty cycle and a supplied pixel value of the particular individual image,
determining a switching request (S) for switching the basic duty cycle to a second value (DC2),
transmitting the switching request (S) at a first point in time (t1) in the direction of the control unit (4), and
determining the individual images of the image stream (VS) from a second point in time (t2), which occurs after a waiting period (T1) comprising two individual image times starting from the first point in time (t1), depending on a validity of the second value (DC2) of the basic duty cycle, wherein the waiting period (T1) is waited for in order to calculate the individual images depending on the use of the second value (DC2) of the basic duty cycle.

## Revendications

1. Dispositif (2) permettant de faire fonctionner une unité de commande (4) d'une matrice de micromiroirs (210) d'un dispositif d'éclairage (202) d'un véhicule automobile, dans lequel le dispositif (2) comprend au moins un processeur (P) et au moins une mémoire (M) comportant un code de programme informatique (C), dans lequel le code de programme informatique (C) est configuré de sorte qu'il agit avec l'au moins un processeur (P) pour que le dispositif (2)
fournisse un flux d'images (VS) pour l'unité de commande (4),
détermine des images individuelles du flux d'images (VS) en fonction d'une validité d'une première valeur (DC1) d'un rapport cyclique de base qui est actif pour une pluralité de micromiroirs de la matrice de micromiroirs (210), dans lequel un rapport cyclique d'un micromiroir respectif est obtenu à partir du rapport cyclique de base et d'une valeur de pixel acheminée de l'image individuelle respective,
détermine une demande de commutation (S) pour la commutation du rapport cyclique de base sur une seconde valeur (DC2),
transmette la demande de commutation (S) à un premier instant (t1) en direction de l'unité de commande (4), et
détermine les images individuelles du flux d'images (VS) à partir d'un second instant (t2), lequel, en partant du premier instant (t1), intervient après une durée d'attente (T1) comprenant deux temps d'image individuelle, en fonction d'une validité de la seconde valeur (DC2) du rapport cyclique de base, dans lequel la durée d'attente (T1) est attendue pour calculer les images individuelles en fonction de l'application de la seconde valeur (DC2) du rapport cyclique de base.

2. Dispositif (2) selon la revendication 1, dans lequel le dispositif (2)
met à l'échelle des valeurs de pixels des images individuelles du flux d'images (VS) avant le second instant (t2) en fonction de la validité de la première valeur (DC1) du rapport cyclique de base, et
met à l'échelle des valeurs de pixels des images individuelles du flux d'images (VS) après le second instant (t2) en fonction de la validité de la seconde valeur (DC2) du rapport cyclique de base.

3. Dispositif (2) selon la revendication 2, dans lequel la seconde valeur (DC2) pour le rapport cyclique de base est supérieure à la première valeur (DC1), et dans lequel une intensité lumineuse maximale de la distribution de lumière émise après le second instant (t2) est supérieure à celle avant le second instant (t2) .

4. Dispositif (2) selon l'une des revendications précédentes, dans lequel le dispositif (2)
réalise, après la détermination de la demande de commutation (S) pour la commutation du rapport cyclique de base valide sur la seconde valeur (DC2), une réservation d'un canal de contrôle (234) pour la transmission de la demande de commutation (S), et
attend une autre durée d'attente (T0) jusqu'à l'envoi de la demande de commutation (S) au premier instant (t1) sur le canal de contrôle (234) en direction de l'unité de commande (4).

5. Dispositif (2) selon l'une des revendications précédentes, dans lequel le dispositif (2) fournit la demande de commutation (S) à l'unité de commande (4) sous forme d'informations intégrées dans le flux d'images (VS).

6. Dispositif (2) selon l'une des revendications précédentes, dans lequel le dispositif (2) comprend une unité de calcul d'images (220) et une unité pilote (222), dans lequel l'unité pilote (222) est configurée pour être connectée à une interface pilote de l'unité de commande (4), et dans lequel l'unité de calcul d'images (220) est configurée pour être connectée à une interface vidéo de l'unité de commande (4).

7. Dispositif (2) selon les revendications 5 et 6, dans lequel une unité d'observation (226) est configurée pour examiner le flux d'images (VS_S) généré par l'unité de calcul d'image (220) en vue de l'apparition de la demande de commutation (S) et pour transmettre l'apparition de la demande de commutation (S) dans le flux d'images (VS_S) à l'unité pilote (222), et dans lequel l'unité pilote (222) transmet la demande de commutation (S) à l'unité de commande (4).

8. Dispositif (2) selon l'une des revendications précédentes, dans lequel la seconde valeur (DC2) pour le rapport cyclique de base est transmise par sections séparément de la demande de commutation (S) en direction de l'unité de commande (4).

9. Dispositif (2) selon l'une des revendications précédentes, dans lequel la durée d'attente (T1) et l'autre durée d'attente (T0) sont des valeurs constantes.

10. Procédé permettant de faire fonctionner une unité de commande (4) d'une matrice de micromiroirs (210) d'un dispositif d'éclairage (202) d'un véhicule automobile, dans lequel le procédé comprend:
la fourniture d'un flux d'images (VS) pour l'unité de commande (4),
la détermination d'images individuelles du flux d'images (VS) en fonction d'une validité d'une première valeur (DC1) d'un rapport cyclique de base qui est actif pour une pluralité de micromiroirs de la matrice de micromiroirs (210), dans lequel un rapport cyclique d'un micromiroir respectif est obtenu à partir du rapport cyclique de base et d'une valeur de pixel acheminée de l'image individuelle respective,
la détermination d'une demande de commutation (S) pour la commutation du rapport cyclique de base sur une seconde valeur (DC2),
la transmission de la demande de commutation (S) à un premier instant (t1) en direction de l'unité de commande (4), et
la détermination des images individuelles du flux d'images (VS) à partir d'un second instant (t2), lequel, en partant du premier instant (t1), intervient après une durée d'attente (T1) comprenant deux temps d'image individuelle, en fonction d'une validité de la seconde valeur (DC2) du rapport cyclique de base, dans lequel la durée d'attente (T1) est attendue pour calculer les images individuelles en fonction de l'application de la seconde valeur (DC2) du rapport cyclique de base.
